# EUROPEAN PATENT APPLICATION

(11) **EP 4 729 553 A1**
(43) Date of publication of application: **22.04.2026**
(21) Application number: 24823490.8
(22) Date of filing: 14.06.2024
(51) Int. Cl.: C08F 293/00, B41J 2/01, B41M 5/00, C09C 3/04, C09C 3/10, C09D 11/02, C09D 17/00

(54) **BLOCK POLYMER, AND COLORING MATERIAL DISPERSION AND INK COMPOSITION USING SAME**

(30) Priority: 15.06.2023 JP 2023098833
(71) Applicant: Mikuni Shikiso Kabushiki Kaisha, Himeji-shi Hyogo 671-0234 (JP)
(72) Inventor: KAWAKAMI Hirotaka, Himeji-shi Hyogo 671-0234 (JP); Hamasaki Yukako, Himeji-shi Hyogo 671-0234 (JP)
(74) Representative: Wächtershäuser & Hartz Patentanwaltspartnerschaft mbB
(86) International application number: PCT/JP2024/021786
(87) International publication number: WO 2024/257877

(57) **Abstract**

[Problem to be solved] To provide an aqueous inkjet ink composition having excellent storage stability and redispersibility. [Means for solving the problem] It is possible to achieve extremely excellent performance in an aqueous inkjet ink containing a water-insoluble colorant by using, as a dispersant, a block polymer having a segment containing, in a predetermined ratio, a monomer having a hydrophobic functional group or a structural unit derived from a monomer having a hydrophobic functional group, and a monomer having a hydrophilic functional group or a structural unit derived from a hydrophilic functional group.

## Description

### Technical Field

The present invention relates to a coloring material dispersion and an ink composition that can be suitably used even for aqueous inkjet inks by containing a specific block polymer, and also relates to the block polymer.

### Technical Background

Conventionally, pigments have been widely used as colorants for inks for inkjet recording, inks for writing instruments, and the like because of their excellent fastness properties, such as water resistance and light resistance. In aqueous inks that use pigments, since pigments have no solubility in water, it is important, when used in an ink composition, to stably disperse the pigments in water as fine particles. However, aqueous inks that use pigments face challenges regarding denaturation of the recording liquid due to aggregation and sedimentation of the pigments, that is, so-called storage stability. Regarding storage stability, it is particularly required that viscosity and particle size remain within suitable ranges even after long-term storage.

In addition, it is required that the ink exhibits excellent color characteristics such as color development and gloss, that the ink does not clog nozzles, and that even when nozzle clogging occurs after a long period of non-use, recovery occurs quickly, that is, that the ink has excellent discharge stability.

The cause of reduced discharge stability is often that the medium in the ink evaporates, causing the solid components of the ink to precipitate or crystallize at an air/liquid interface. In particular, with aqueous colorant inks, changes in solvent composition due to evaporation may cause the dispersed colorant to aggregate. The aggregated material that precipitates in such cases needs to be easily redispersed during head cleaning operations.

To address these issues, it has been proposed to improve storage stability by using a block polymer that exhibits superior pigment adsorptivity compared to random polymers. For example, Patent Document 1 proposes achieving both dispersibility and gloss by using a block polymer having a gradient copolymer structure with a hydrophilicity-hydrophobicity gradient. Specifically, as the block polymer, a monomer having one aromatic ring, such as styrene or benzyl methacrylate, is used for a hydrophobic segment.

Further, Patent Document 2 proposes a method for improving storage stability, discharge stability, and redispersibility by using a block polymer and a pigment derivative. Specifically, what is used is, similar to Patent Document 1, a hydrophobic segment composed of a monomer having one aromatic ring. However, by using the derivative, an attempt is made to improve storage stability, discharge stability, and redispersibility.

Further, in addition to using a block polymer, for example, Patent Document 3 addresses deterioration in storage stability by coating (encapsulating) the colorant with a water-insoluble polymer dispersant.

Further, Patent Document 4 proposes a method for achieving excellent storage stability, redispersibility, and color characteristics by using a monomer containing a biphenyl group in the hydrophobic segment of the block polymer.

### Related Art

### Patent Document

Patent Document 1: Japanese Patent Application Laid-Open Publication No. 2008-195769.
Patent Document 2: Japanese Patent Application Laid-Open Publication No. 2011-225834.
Patent Document 3: Japanese Patent Application Laid-Open Publication No. 2016-26256.
Patent Document 4: Japanese Patent Application Laid-Open Publication No. 2020-111683.

### Summary of the Invention

### Problems to Be Solved by the Invention

However, the present inventors have found that even when using the block polymer described in Patent Document 1, the redispersibility related to discharge stability is insufficient.

Further, it has been found that when a pigment derivative is used as described in Patent Document 2, the problem of color deterioration occurs, and the issue with color characteristics cannot be resolved.

Further, in the method using a water-insoluble polymer as in Patent Document 3, high hydrophobicity of the dispersant causes a problem of poor redispersibility during head cleaning operations.

Further, when using the block polymer described in Patent Document 4, although storage stability is improved, redispersibility is insufficient, and there is a risk that discharge stability may decrease depending on usage environment or ink composition. In particular, the present inventors have found that in ink compositions with a high proportion of solvent, sufficient redispersibility tends not to be obtained.

The present invention has been made in view of the problems of the prior art, and an object thereof is to provide a coloring material dispersion capable of preparing an ink composition that exhibits excellent storage stability, higher redispersibility, and excellent color characteristics by using a block polymer having a specific structure.

### Means for Solving the Problems

As a result of intensive studies to achieve the above object, the present inventors have found that the above problems can be solved by using, as a dispersant, a block polymer having a segment containing a structural unit derived from a specific monomer in a specific ratio. Further, the present inventors have found that the above problems can be solved by using, as a dispersant, a block polymer having a segment containing a specific functional group in a specific ratio. That is, according to the present invention, the following block polymer and a coloring material dispersion using the block polymer are provided.

That is, the present invention includes the following.
(1) A block polymer characterized by having at least one segment (A) satisfying the following (a1) and (a2), and at least one segment (B) satisfying the following (b1) and (b2), and by having a peak top molecular weight of 3,000 or more and 16,000 or less:
   (a1): having a structural unit derived from a monomer having a hydrophobic functional group and a structural unit derived from a monomer having a hydrophilic functional group, wherein a mass ratio of the two (total mass of the structural unit derived from a monomer having a hydrophobic functional group / total mass of the structural unit derived from a monomer having a hydrophilic functional group) is 2.3 or more and 19.0 or less
   (a2): peak top molecular weight of 750 or more
   (b1): having a structural unit derived from a monomer having a hydrophobic functional group and a structural unit derived from a monomer having a hydrophilic functional group, wherein a mass ratio of the two (total mass of the structural unit derived from a monomer having a hydrophobic functional group / total mass of the structural unit derived from a monomer having a hydrophilic functional group) is 0.43 or more and less than 2.3
   (b2): peak top molecular weight of 750 or more
(2) The block polymer according to the above (1), characterized in that, in the segment (A), a proportion occupied by a sum of mass of the structural unit derived from a monomer having a hydrophobic functional group and mass of the structural unit derived from a monomer having a hydrophilic functional group is 10% by mass or more, and in the segment (B), a proportion occupied by a sum of mass of the structural unit derived from a monomer having a hydrophobic functional group and mass of the structural unit derived from a monomer having a hydrophilic functional group is 10% by mass or more.
(3) The block polymer according to the above (2), characterized in that a proportion occupied by a sum of mass of the segment (A) and mass of the segment (B) in the block polymer is 50% by mass or more.
(4) The block polymer according to the above (3), characterized in that the monomer having a hydrophobic functional group is a monomer having a phenyl group and/or a monomer having a biphenyl group, and the monomer having a hydrophilic functional group is a monomer having a carboxy group.
(5) A block polymer characterized by having at least one segment (A') satisfying the following (a1') and (a2), and at least one segment (B') satisfying the following (b1') and (b2), and by having a peak top molecular weight of 3,000 or more and 16,000 or less:
   (a1'): a molar ratio of a hydrophobic functional group to a hydrophilic functional group (total molar amount of a hydrophobic functional group / total molar amount of a hydrophilic functional group) is 0.85 or more and 8.50 or less
   (a2): peak top molecular weight of 750 or more
   (b1'): a molar ratio of a hydrophobic functional group to a hydrophilic functional group (total molar amount of a hydrophobic functional group / total molar amount of a hydrophilic functional group) is 0.16 or more and less than 0.85
   (b2): peak top molecular weight of 750 or more
(6) The block polymer according to the above (5), characterized in that, in the segment (A'), a proportion occupied by a sum of mass of the hydrophobic functional group and mass of the hydrophilic functional group is 10% by mass or more, and in the segment (B'), a proportion occupied by a sum of mass of the hydrophobic functional group and mass of the hydrophilic functional group is 10% by mass or more.
(7) The block polymer according to the above (6), characterized in that a proportion occupied by a sum of mass of the segment (A') and mass of the segment (B') in the block polymer is 50% by mass or more.
(8) The block polymer according to the above (7), characterized in that the hydrophobic functional group is a phenyl group and/or a biphenyl group, and the hydrophilic functional group is a carboxy group.
(9) The block polymer according to any one of the above (1) to (8), characterized by having an acid value of 120 mgKOH/g or more and 190 mgKOH/g or less.
(10) A coloring material dispersion characterized by comprising the block polymer according to any one of the above (1) to (9), a water-insoluble coloring material, and an aqueous medium.
(11) The coloring material dispersion according to the above (10), wherein the coloring material is a pigment and/or a water-insoluble dye.
(12) A method for producing a printing ink, characterized by mixing the coloring material dispersion according to the above (10) with an organic solvent, a resin, and a preservative.
(13) A printing ink containing at least the block polymer according to any one of the above (1) to (9), a coloring material, an organic solvent, a resin, and a preservative.

### Effects of Invention

A coloring material dispersion can be obtained that allows preparation of an ink composition exhibiting excellent storage stability and redispersibility and achieving excellent color characteristics by containing the block polymer of the present invention.

### Brief Description of Drawing

[Fig. 1] Figures showing photographs of a coating film obtained in Example 6.
[Fig. 2] Figures showing photographs of a coating film obtained in Example 7.
[Fig. 3] Figures showing photographs of a coating film obtained in Example 8.

### Mode for Carrying Out the Invention

In the following, the present invention is described in detail.

### (Block polymer)

A block polymer according to a first aspect of the present invention is characterized by having at least one segment (A) satisfying the following (a1) and (a2), and at least one segment (B) satisfying the following (b1) and (b2):
(a1): having a structural unit derived from a monomer having a hydrophobic functional group and a structural unit derived from a monomer having a hydrophilic functional group, wherein a mass ratio of the two (total mass of the structural unit derived from a monomer having a hydrophobic functional group / total mass of the structural unit derived from a monomer having a hydrophilic functional group) is 2.3 or more and 19.0 or less
(a2): peak top molecular weight of 750 or more
(b1): having a structural unit derived from a monomer having a hydrophobic functional group and a structural unit derived from a monomer having a hydrophilic functional group, wherein a mass ratio of the two (total mass of the structural unit derived from a monomer having a hydrophobic functional group / total mass of the structural unit derived from a monomer having a hydrophilic functional group) is 0.43 or more and less than 2.3
(b2): peak top molecular weight of 750 or more

Further, a block polymer according to a second aspect of the present invention is characterized by having at least one segment (A') satisfying the following (a1') and (a2), and at least one segment (B') satisfying the following (b1') and (b2):
(a1'): a molar ratio of a hydrophobic functional group to a hydrophilic functional group (total molar amount of a hydrophobic functional group / total molar amount of a hydrophilic functional group) is 0.85 or more and 8.50 or less
(a2): peak top molecular weight of 750 or more
(b1'): a molar ratio of a hydrophobic functional group to a hydrophilic functional group (total molar amount of a hydrophobic functional group / total molar amount of a hydrophilic functional group) is 0.16 or more and less than 0.85
(b2): peak top molecular weight of 750 or more

### [Hydrophobic functional group]

A hydrophobic functional group means a functional group having hydrophobicity, and a hydrophobic functional group in a block polymer of the present invention is not particularly limited. Representative examples thereof include alkyl groups, phenyl groups, biphenyl groups, naphthyl groups, and the like. However, biphenyl groups and phenyl groups, which have a moderately high degree of hydrophobicity, are preferred, and a block polymer of the present invention having a phenyl group in particular is most preferred because it provides high redispersibility to pigment dispersions.

### [Monomer having a hydrophobic functional group]

In the present invention, a monomer having a hydrophobic functional group refers to a monomer having at least one of the above-described hydrophobic functional groups. Any monomer having a hydrophobic functional group can be used without particular limitation. Examples thereof include tert-butyl acrylate, tert-butyl methacrylate, n-hexyl acrylate, n-hexyl methacrylate, n-octyl acrylate, n-octyl methacrylate, iso-octyl acrylate, iso-octyl methacrylate, 2-ethylhexyl acrylate, 2-ethylhexyl methacrylate, decyl acrylate, decyl methacrylate, lauryl acrylate, lauryl methacrylate, stearyl acrylate, stearyl methacrylate, cyclohexyl acrylate, cyclohexyl methacrylate, phenyl acrylate, phenyl methacrylate, phenoxyethyl acrylate, isobornyl acrylate, nonylphenyl acrylate, nonylphenyl methacrylate, benzyl acrylate, benzyl methacrylate, dicyclopentenyl acrylate, dicyclopentenyl methacrylate, styrene, methylstyrene, vinyltoluene, and the like.

Among these monomers having hydrophobic functional groups, those having a phenyl group or a biphenyl group are preferred; those having one phenyl group and a molecular weight of 140 or more and 200 or less are more preferred; and among these, phenyl acrylate, phenyl methacrylate, and phenoxyethyl acrylate are even more preferred, with phenoxyethyl acrylate being most preferred. Block polymers using these preferred monomers have a moderate degree of hydrophobicity and are superior in redispersibility and storage stability. Further, since these preferred monomers have an aromatic ring, as will be described later, when a coloring material has an aromatic ring, π-π interaction occurs, which is considered to further advantageously contribute to storage stability.

Among the monomers having a hydrophobic functional group, those having a LogP of 2.0 or more and 5.0 or less are preferred. Within this range, the degree of hydrophobicity is moderate, and redispersibility and storage stability are even more excellent. Those having a LogP of 2.0 or more and 3.0 or less are more preferred for monomers having a hydrophobic functional group.

Here, LogP is measured using a method described in "OECD GUIDELINE FOR TESTING OF CHEMICALS, 'Partition Coefficient (n-octanol/water), High Performance Liquid Chromatography (HPLC) Method', Adopted by the Council on 30th March 1989" as a measurement of a partition coefficient. Further, other methods that can yield equivalent values may also be used.

### [Hydrophilic functional group]

A hydrophilic functional group means a functional group having hydrophilicity, and a hydrophilic functional group in a block polymer of the present invention is not particularly limited. However, those that ionize to form anions upon neutralization with an alkali compound are particularly preferred, and representative examples thereof include a carboxy group, a phosphoric acid group, a sulfonic acid group, and the like. These are particularly excellent in wet rub fastness as well. Among these, a carboxy group is preferred because it has a moderate degree of hydrophilicity and can achieve a good balance between redispersibility of a pigment dispersion using an obtained block polymer and solubility in a solvent.

### [Monomer having a hydrophilic functional group]

A monomer having a hydrophilic functional group means a monomer having at least one of the above-described hydrophilic functional groups, and a monomer having a hydrophilic functional group used in the present invention is not particularly limited. Representative examples thereof include acrylic acid, methacrylic acid, maleic acid, itaconic acid, vinylphosphonic acid, vinylsulfonic acid, and the like.

Among the monomers having a hydrophilic functional group, those having a carboxy group are preferred; those having one carboxy group and a molecular weight of 50 or more and 100 or less are more preferred; and among these, methacrylic acid and acrylic acid are particularly preferred. When these preferred monomers are used, block polymers have a moderate degree of hydrophilicity and have even more excellent storage stability. Further, in the segment (B) and segment (B') to be described later, it is most preferred to contain both methacrylic acid and acrylic acid. By containing both acrylic acid and methacrylic acid, copolymerizability during polymer synthesis is improved, and polymer uniformity is enhanced. As a result, a coloring material can be made into finer particles, and a dispersion and an ink having even better storage stability can be obtained.

Among the monomers having a hydrophilic functional group, those having a LogP of -2.0 or more and 1.0 or less are preferred. Within this range, the degree of hydrophilicity is moderate, and storage stability is even more excellent. Those having a LogP of 0.0 or more and 1.0 or less are more preferred for monomers having a hydrophilic functional group. The method for measuring LogP is as described above.

### (Block polymer according to the first aspect of the present invention)

### [Segment A]

The block polymer according to the first aspect of the present invention has at least one segment (A) to be described below. In a dispersion of a coloring material or the like, it is considered that the segment (A) mainly plays a role of adsorbing the block polymer onto the coloring material through its hydrophobicity and imparting dispersibility.

The segment (A) contains a structural unit derived from a monomer having a hydrophobic functional group and a structural unit derived from a monomer having a hydrophilic functional group, as described above, and a mass ratio of the two (total mass of the structural unit derived from a monomer having a hydrophobic functional group / total mass of the structural unit derived from a monomer having a hydrophilic functional group) is 2.3 or more and 19.0 or less

In the segment (A), by setting the mass ratio of the structural unit derived from a monomer having a hydrophobic functional group to the structural unit derived from a monomer having a hydrophilic functional group within the above range, excellent redispersibility and storage stability can be achieved. This is considered to be because, by containing a structural unit derived from a monomer having a hydrophobic functional group within the above ratio, sufficient adsorption force to the coloring material can be achieved; and by containing a structural unit derived from a monomer having a hydrophilic functional group within the above ratio, segments (A) of different polymers can slightly repel each other due to hydrophilic-hydrophobic interactions, adsorption, entanglement, and aggregation between polymers can be suppressed, and many polymers can efficiently adsorb onto the coloring material and impart dispersibility.

The mass ratio of the two is more preferably 4.0 or more and 19.0 or less, and even more preferably 5.0 or more and 12.0 or less. Within this range, even more excellent redispersibility and storage stability can be achieved.

To adjust the mass ratio of the structural unit derived from a monomer having a hydrophobic functional group to the structural unit derived from a monomer having a hydrophilic functional group within the above range, it is sufficient to polymerize the above-described monomer having a hydrophobic functional group and monomer having a hydrophilic functional group in the above ratio during synthesis of the block polymer. Further, when analyzing and confirming the obtained block polymer, H-NMR, GPC, acid value titration, or the like can be used.

The peak top molecular weight of the segment (A) is 750 or more. When the peak top molecular weight is less than 750, there is a risk that the adsorption force to the material may be insufficient and redispersibility may deteriorate. The peak top molecular weight of the segment (A) is preferably 1,000 or more, and more preferably 2,000 or more.

A method for measuring the peak top molecular weight is as shown in Examples, but it is not limited thereto as long as similar results can be obtained.

In the block polymer according to the first aspect of the present invention, a proportion occupied by the mass of the segment (A) is preferably 25% by mass or more and 75% by mass or less. When the proportion of the segment (A) is less than 25% by mass, pigment adsorption performance tends to be insufficient, resulting in lower redispersibility and storage stability. On the other hand, when the proportion of the segment (A) exceeds 75% by mass, it may become insoluble in a solvent. The proportion of the segment (A) is more preferably 55% by mass or more and 75% by mass or less, and most preferably 55% by mass or more and 65% by mass or less.

An arrangement order of structural units derived from monomers in the segment (A) is not particularly limited, but a random arrangement is preferred. That is, in the present invention, various forms such as a random copolymer, a block copolymer, and an alternating copolymer can be used as the form of the segment (A). However, among these, a random copolymer is particularly preferred.

The segment (A) can contain any structural units in addition to a structural unit derived from a monomer having a hydrophobic functional group and a structural unit derived from a monomer having a hydrophilic functional group. When the segment (A) is taken as 100% by mass, a proportion occupied by a sum of mass of a structural unit derived from a monomer having a hydrophobic functional group and a structural unit derived from a monomer having a hydrophilic functional group in the segment (A) is preferably 10% by mass or more, more preferably 25% by mass or more, even more preferably 50% by mass or more, and most preferably 100% by mass, that is, the segment (A) is most preferably composed solely of a structural unit derived from a monomer having a hydrophobic functional group and a structural unit derived from a monomer having a hydrophilic functional group. By setting it within the above preferred range, the effects of the present invention can be more effectively achieved.

### [Segment (B)]

The block polymer according to the first aspect of the present invention has at least one segment (B) to be described below. In a dispersion of a coloring material or the like, it is considered that the segment (B) mainly plays a role of dissolving the block polymer in an aqueous solvent through its hydrophilicity.

The segment (B) contains a structural unit derived from a monomer having a hydrophobic functional group and a structural unit derived from a monomer having a hydrophilic functional group, as described above, and a mass ratio of the two (mass of the structural unit derived from a monomer having a hydrophobic functional group / mass of the structural unit derived from a monomer having a hydrophilic functional group) is 0.43 or more and less than 2.30.

In the segment (B), by setting the mass ratio of the structural unit derived from a monomer having a hydrophobic functional group to the structural unit derived from a monomer having a hydrophilic functional group within the above range, redispersibility can be improved, and viscosity of the coloring material dispersion or ink can be reduced to a suitable range. The improvement in redispersibility is considered to be because, by containing a structural unit derived from a monomer having a hydrophilic functional group within the above ratio, the polymer can uniformly dissolve in an aqueous solvent, allowing many polymers to efficiently adsorb onto the coloring material. Further, the ability to reduce the viscosity is considered to be because, by containing a structural unit derived from a hydrophilic functional group within the above ratio, sufficient dissolution in a solvent can be achieved; and by containing a structural unit derived from a hydrophobic functional group within the above ratio, segments (B) of different polymers slightly repel each other due to hydrophilic-hydrophobic interactions, and thus, adsorption, aggregation, and entanglement are less likely to occur, and the polymers are more easily disentangled.

The mass ratio of the two is more preferably 0.50 or more and 1.50 or less, and even more preferably 0.67 or more and 1.00 or less. Within this range, viscosity reduction and redispersibility are even more excellent when used in a dispersion or ink.

To adjust the ratio of the structural units within the above range, it is sufficient to polymerize the monomers in the above ratio during synthesis of the block polymer. Further, when analyzing and confirming the obtained block polymer, H-NMR, GPC, acid value titration, or the like can be used.

The peak top molecular weight of the segment (B) is 750 or more. When the peak top molecular weight is less than 750, there is a risk that solubility may be insufficient and viscosity may increase, and moreover, redispersibility may deteriorate. The peak top molecular weight of the segment (B) is preferably 1,000 or more, and more preferably 2,000 or more.

A method for measuring the peak top molecular weight is as shown in Examples, but it is not limited thereto as long as similar results can be obtained.

In the block polymer according to the first aspect of the present invention, a proportion occupied by the mass of the segment (B) is preferably 25% by mass or more and 75% by mass or less. When the proportion of the segment (B) is less than 25% by mass, it may become insoluble in a solvent. On the other hand, when the proportion of the segment (B) exceeds 75% by mass, pigment adsorption performance tends to be insufficient, resulting in lower redispersibility and storage stability. The proportion of the segment (B) is more preferably 25% by mass or more and 45% by mass or less, and most preferably 35% by mass or more and 45% by mass or less.

An arrangement order of structural units derived from monomers in the segment (B) is not particularly limited, but a random arrangement is preferred. That is, in the present invention, various forms such as a random copolymer, a block copolymer, and an alternating copolymer can be used as the form of the segment (B). However, among these, a random copolymer is particularly preferred.

The segment (B) can contain any structural units in addition to a structural unit derived from a monomer having a hydrophobic functional group and a structural unit derived from a monomer having a hydrophilic functional group.

When the entire segment (B) is taken as 100% by mass, a proportion occupied by a sum of a structural unit derived from a monomer having a hydrophobic functional group and a structural unit derived from a monomer having a hydrophilic functional group in the segment (B) is preferably 10% by mass or more, more preferably 25% by mass or more, even more preferably 50% by mass or more, and most preferably 100% by mass, that is, the segment (B) is most preferably composed solely of a structural unit derived from a monomer having a hydrophobic functional group and a structural unit derived from a monomer having a hydrophilic functional group. By setting it within the above preferred range, the effects of redispersibility and viscosity reduction can be more effectively achieved.

### [Segment composition]

The block polymer according to the first aspect of the present invention may have two or more segments (A) and two or more segments (B) described above in each block polymer. However, in order to more highly exhibit the effects of the present invention, it is preferable that each block polymer contains one segment (A) and one segment (B).

The block polymer according to the first aspect of the present invention can contain portions other than the segment (A) and the segment (B) within a range that does not impair the effects of the present invention.

In the block polymer according to the first aspect of the present invention, the proportion occupied by the sum of the mass of the segment (A) and the mass of the segment (B) is preferably 50% by mass or more. More preferably, it contains 90% by mass or more, and most preferably 100% by mass, that is, the block polymer is most preferably composed solely of the segment (A) and the segment (B). Within the above range, the effects of the present invention can be more highly exhibited.

In the block polymer according to the first aspect of the present invention, a ratio of the segment (A) to the segment (B) ((segment A mass):(segment B mass)) is preferably 25:75 to 75:25, more preferably 55:45 to 75:25, and particularly preferably 55:45 to 65:35. By setting the ratio within these preferred ranges, even more excellent storage stability can be achieved.

The ratio of the segment (A) to the segment (B) can be adjusted during the synthesis of the block polymer. As will be described later, the block polymer of the present invention can be synthesized, for example, by polymerizing the segment (A) first and then adding the segment (B). In this case, the amount of monomer to be added may be adjusted so that each segment is polymerized and synthesized to achieve the above ratio.

Further, when analyzing and confirming the obtained block polymer, H-NMR, GPC, acid value titration, or the like can be used.

### (Block polymer according to the second aspect of the present invention)

### [Segment (A')]

The block polymer according to the second aspect of the present invention has at least one segment (A') to be described below. In a dispersion of a coloring material or the like, the segment (A') mainly plays a role of adsorbing onto the coloring material through its hydrophobicity and imparting dispersibility.

The segment (A') contains a hydrophobic functional group and a hydrophilic functional group described above, and a molar ratio of the two (total molar amount of the hydrophobic functional group in the segment / total molar amount of the hydrophilic functional group in the segment) is 0.85 or more and 8.50 or less.

By setting the molar ratio of the hydrophobic functional group to the hydrophilic functional group contained in the segment (A') within the above range, excellent redispersibility and storage stability can be achieved. This is considered to be because, by containing a hydrophobic functional group within the above ratio, sufficient adsorption force to the coloring material can be achieved; and by containing a hydrophilic functional group within the above ratio, segments (A') of different polymers slightly repel each other due to hydrophilic-hydrophobic interactions, adsorption, entanglement, and aggregation between polymers can be suppressed, and many polymers can efficiently adsorb onto the coloring material and impart dispersibility.

The molar ratio of the two is more preferably 1.50 or more and 8.50 or less, and even more preferably 1.50 or more and 5.00 or less. Within this range, even more excellent redispersibility and storage stability can be achieved.

To adjust the molar ratio of the hydrophobic functional group to the hydrophilic functional group within the above range, for example, it is sufficient to polymerize the above-described monomer having a hydrophobic functional group and monomer having a hydrophilic functional group such that the molar amounts of the respective functional groups are in the above ratio during synthesis of the block polymer. Further, when analyzing and confirming the obtained block polymer, H-NMR, GPC, acid value titration, or the like can be used.

The peak top molecular weight of the segment (A') is 750 or more. When the peak top molecular weight is less than 750, there is a risk that the adsorption force to the material may be insufficient and redispersibility may deteriorate. The peak top molecular weight of the segment (A') is preferably 1,000 or more, and more preferably 2,000 or more.

A method for measuring the peak top molecular weight is as shown in Examples, but it is not limited thereto as long as similar results can be obtained.

In the block polymer according to the second aspect of the present invention, a proportion occupied by the mass of the segment (A') is preferably 25% by mass or more and 75% by mass or less. When the proportion of the segment (A') is less than 25% by mass, pigment adsorption performance tends to be insufficient, resulting in lower redispersibility and storage stability. On the other hand, when the proportion of the segment (A') exceeds 75% by mass, it may become insoluble in a solvent. The proportion of the segment (A') is more preferably 55% by mass or more and 75% by mass or less, and most preferably 55% by mass or more and 65% by mass or less.

The segment (A') typically has a structural unit derived from a monomer having a hydrophobic functional group and a structural unit derived from a monomer having a hydrophilic functional group, but it is not limited thereto.

The segment (A') can contain any structural units in addition to a structural unit derived from a monomer having a hydrophobic functional group and a structural unit derived from a monomer having a hydrophilic functional group. When the segment (A') is taken as 100% by mass, a proportion occupied by a sum of mass of a structural unit derived from a monomer having a hydrophobic functional group and a structural unit derived from a monomer having a hydrophilic functional group in the segment (A') is preferably 10% by mass or more, more preferably 25% by mass or more, even more preferably 50% by mass or more, and most preferably 100% by mass, that is, the segment (A') is most preferably composed solely of a structural unit derived from a monomer having a hydrophobic functional group and a structural unit derived from a monomer having a hydrophilic functional group. By setting it within the above preferred range, the effects of the present invention can be more effectively achieved.

Further, an arrangement order of structural units derived from monomers in the segment (A') is not particularly limited, but a random arrangement is preferred. That is, in the present invention, various forms such as a random copolymer, a block copolymer, and an alternating copolymer can be used as the form of the segment (A'). However, among these, a random copolymer is particularly preferred.

When the segment (A') is taken as 100% by mass, a proportion occupied by a sum of mass of a hydrophobic functional group and mass of a hydrophilic functional group in the segment (A') is preferably 5% by mass or more, more preferably 20% by mass or more, and most preferably 35% by mass or more. By setting it within the above preferred range, the effects of the present invention can be more effectively achieved.

### [Segment (B')]

The block polymer according to the second aspect of the present invention has at least one segment (B') to be described below. In a dispersion of a coloring material or the like, the segment (B') mainly plays a role of dissolving the block polymer in a solvent through its hydrophilicity.

The segment (B') contains a hydrophobic functional group described above and a hydrophilic functional group described above, and a molar ratio of the two (total molar amount of the hydrophobic functional group in the segment / total molar amount of the hydrophilic functional group in the segment) is 0.16 or more and less than 0.85.

In the segment (B'), by setting the molar ratio of the hydrophobic functional group to the hydrophilic functional group within the above range, redispersibility can be improved, and viscosity of the coloring material dispersion or ink can be reduced to a suitable range. The improvement in redispersibility is considered to be because, by containing a hydrophilic functional group within the above ratio, the polymer can uniformly dissolve in an aqueous solvent, allowing many polymers to efficiently adsorb onto the coloring material. Further, the ability to reduce the viscosity is considered to be because, by containing a hydrophilic functional group within the above ratio, sufficient dissolution in a solvent can be achieved; and by containing a hydrophobic functional group within the above ratio, segments (B) of different polymers slightly repel each other due to hydrophilic-hydrophobic interactions, and thus, adsorption, aggregation, and entanglement are less likely to occur, and the polymers are more easily disentangled.

The molar ratio of the two is more preferably 0.25 or more and 0.60 or less, and even more preferably 0.25or more and 0.45or less. Within this range, even more excellent redispersibility and storage stability can be achieved.

To adjust the molar ratio of the hydrophobic functional group to the hydrophilic functional group within the above range, for example, it is sufficient to polymerize the above-described monomer having a hydrophobic functional group and monomer having a hydrophilic functional group such that the respective functional groups are in the above ratio during synthesis of the block polymer. Further, when analyzing and confirming the obtained block polymer, H-NMR, GPC, acid value titration, or the like can be used.

The peak top molecular weight of the segment (B') is 750 or more. When the peak top molecular weight is less than 750, there is a risk that solubility may be insufficient and viscosity may increase, and moreover, redispersibility may deteriorate. The peak top molecular weight of the segment (B') is preferably 1,000 or more, and more preferably 2,000 or more.

A method for measuring the peak top molecular weight is as shown in Examples, but it is not limited thereto as long as similar results can be obtained.

In the block polymer according to the second aspect of the present invention, a proportion occupied by the mass of the segment (B') is preferably 25% by mass or more and 75% by mass or less. When the proportion of the segment (B') is less than 25% by mass, it may become insoluble in a solvent. On the other hand, when the proportion of the segment (A') exceeds 75% by mass, pigment adsorption performance tends to be insufficient, resulting in lower redispersibility and storage stability. The proportion of the segment (B') is more preferably 25% by mass or more and 45% by mass or less, and most preferably 35% by mass or more and 45% by mass or less.

The segment (B') typically has a structural unit derived from a monomer having a hydrophobic functional group and a structural unit derived from a monomer having a hydrophilic functional group, but it is not limited thereto.

The segment (B') can contain any structural units in addition to a structural unit derived from a monomer having a hydrophobic functional group and a structural unit derived from a monomer having a hydrophilic functional group. When the segment (B') is taken as 100% by mass, a proportion occupied by a sum of mass of a structural unit derived from a monomer having a hydrophobic functional group and a structural unit derived from a monomer having a hydrophilic functional group in the segment (B') is preferably 10% by mass or more, more preferably 25% by mass or more, even more preferably 50% by mass or more, and most preferably 100% by mass, that is, the segment (B') is most preferably composed solely of a structural unit derived from a monomer having a hydrophobic functional group and a structural unit derived from a monomer having a hydrophilic functional group. By setting it within the above preferred range, the effects of the present invention can be more effectively achieved.

Further, an arrangement order of structural units derived from monomers in the segment (B') is not particularly limited, but a random arrangement is preferred. That is, in the present invention, various forms such as a random copolymer, a block copolymer, and an alternating copolymer can be used as the form of the segment (B'). However, among these, a random copolymer is particularly preferred.

When the segment (B') is taken as 100% by mass, a proportion occupied by a sum of mass of a hydrophobic functional group and mass of a hydrophilic functional group in the segment (B') is preferably 5% by mass or more, more preferably 20% by mass or more, and most preferably 40% by mass or more. By setting it within the above preferred range, the effects of the present invention can be more effectively achieved.

### [Segment composition]

The block polymer according to the second aspect of the present invention may have two or more segments (A') and two or more segments (B') described above in each block polymer. However, in order to more highly exhibit the effects of the present invention, it is preferable that each block polymer contains one segment (A') and one segment (B').

The block polymer according to the second aspect of the present invention can contain portions other than the segment (A') and the segment (B') within a range that does not impair the effects of the present invention.

In the block polymer according to the first aspect of the present invention, the proportion occupied by the sum of the mass of the segment (A') and the mass of the segment (B') is preferably 50% by mass or more. More preferably, it contains 90% by mass or more, and most preferably 100% by mass, that is, the block polymer is most preferably composed solely of the segment (A') and the segment (B'). Within the above range, the effects of the present invention can be more highly exhibited.

In the block polymer according to the second aspect of the present invention, a ratio of the segment (A') to the segment (B') ((segment (A') mass):(segment (B') mass)) is preferably 25:75 to 75:25, more preferably 55:45 to 75:25, and particularly preferably 55:45 to 65:35. By setting the ratio within these preferred ranges, particularly excellent storage stability can be achieved.

The ratio of the segment (A') to the segment (B') can be adjusted by a ratio of monomers during the synthesis of the block polymer. Further, when analyzing and confirming the obtained block polymer, H-NMR, GPC, acid value titration, or the like can be used.

A block structure of the block polymer according to the first aspect of the present invention and the block polymer according to the second aspect of the present invention is not particularly limited. Examples of selectable block structures include AB block polymers, ABC triblock polymers, ABA triblock polymers, those in which other polymer units are bonded to a triblock structure, and the like. Among these, AB block polymers and ABA triblock polymers are preferred, with AB block polymers being particularly preferred.

### [Resin properties of the block polymer]

The peak top molecular weight of each block polymer of the present invention is 3,000 to 16,000. It is preferably 4,000 to 14,000, and particularly preferably 5,000 to 12,000. When the peak top molecular weight is less than 3,000, steric hindrance or charge repulsion becomes smaller, and storage stability cannot be maintained. On the other hand, when the peak top molecular weight is 16,000 or more, problems such as increased ink viscosity, slow adsorption rate, and poor dispersion progression occur. Further, water solubility of the polymer itself may significantly decrease.

Measurement conditions for the peak top molecular weight are as described in Examples.

The block polymer of the present invention preferably has an acid value of 120 mgKOH/g or more and 190 mgKOH/g or less. When the acid value exceeds 190 mgKOH/g, affinity for an aqueous medium becomes excessively high, which may reduce adsorption performance onto pigment and make dispersion difficult. Conversely, when the acid value is reduced to less than 120 mgKOH/g, water solubility decreases, and thus, redispersibility may deteriorate.

The acid value is an amount in mg of KOH required to neutralize 1 g of resin. Specifically, it can be measured by titrating a solution of the resin dissolved in methoxypropanol using a 1 N aqueous NaOH solution.

An aqueous ink or a coloring material dispersion using the block polymer of the present invention described above exhibits extremely excellent dispersibility and storage stability. As a result of intensive studies, the inventors have found that in conventional block polymers used for pigment dispersion, hydrophobic portions aggregate with each other and hydrophilic portions aggregate with each other in a solvent to form micelles and the like, and do not disentangle easily, so that many polymers remain in a micellar state without adsorbing to the pigment, and dispersion performance may not be sufficiently exhibited. Then, as a result of trial and error, the inventors have arrived at a novel technical concept in which, by incorporating a hydrophilic functional group (to an extent that does not impair pigment adsorption ability) into a portion having hydrophobicity and playing a role of pigment adsorption to form a segment (A) (segment (A')), and by incorporating a hydrophobic functional group (to an extent that does not impair solubility) into a portion having hydrophilicity and playing a role of dissolving in a solvent to form a segment (B) (segment (B')), the entanglement and aggregation of polymers are suppressed due to repulsion arising from hydrophilic-hydrophobic interactions, thereby achieving excellent effects such as improved storage stability, shortened dispersion time, enhanced redispersibility, and reduced viscosity, thus completing the present invention.

Further, since the block polymer of the present invention described above has excellent storage stability and redispersibility in this manner, when it is used as a dispersant, there is no need to separately use a pigment derivative. Therefore, a coloring material dispersion and an ink using the block polymer of the present invention also have excellent color characteristics.

### [Production of block polymer]

The block polymer according to the first aspect of the present invention can be produced by polymerizing the above-described monomer having a hydrophilic functional group and monomer having a hydrophobic functional group in the above-described ratio. The block polymer according to the second aspect of the present invention can be produced by polymerizing the above-described monomer having a hydrophilic functional group and monomer having a hydrophobic functional group such that the hydrophilic functional group and the hydrophobic functional group are in the above-described ratio.

A method for producing (synthesizing) the block polymer is not particularly limited. Various methods generally known as methods for producing block polymers can be used, for example: atom transfer radical polymerization performed by redox using a metal complex such as copper or ruthenium as a catalyst and using an organic halide as an initiator; nitroxide method in which the -N-O• radical of a nitroxide migrates; reversible addition-fragmentation chain transfer polymerization using dithiocarbonic acid ester or the like; iodine transfer polymerization; and the like.

Using these commonly known living radical polymerization methods, the block polymer of the present invention can be produced by first forming the segment (A) and then adding monomers to add the segment (B). However, the production method is not limited thereto as long as similar results can be obtained.

### [Initiator]

As the initiator (initiating compound) used in the production of the block polymer of the present invention, common azo-based initiators such as azobisisobutyronitrile (AIBN), azobis(2,4-dimethylvaleronitrile) (V65), 2,2'-azobis(4-methoxy-2,4-dimethylvaleronitrile) (V70), oxide-based initiators such as benzoyl peroxide, dicumyl peroxide, t-butyl peroxybenzoate (BPB), di(4-tert-butylcyclohexyl) peroxydicarbonate (PERKADOX16), potassium persulfate, and the like can be used without restriction. In particular, AIBN is preferred.

### [Neutralizing agent]

When using the block polymer of the present invention as a dispersant, it can be neutralized with an alkaline compound. Specific examples of alkaline compounds that can be used as neutralizing agents include KOH, NaOH, triethylamine, triethanolamine, ammonia, and the like, with tertiary amines having a boiling point of 100 °C or lower being particularly preferred. By using a tertiary amine having a boiling point of 100 °C or lower, water resistance and wet rub fastness are further improved. In particular, when the block polymer of the present invention is prepared using a monomer having a carboxy group as the above-described hydrophilic functional group and then neutralized with such a tertiary amine, a coloring material dispersion containing the block polymer of the present invention and an ink using the same exhibit particularly excellent water resistance and wet rub fastness.

This is considered to be because, after printing with the ink, these amine compounds volatilize, causing the polymer that had been solubilized by neutralization to become insoluble in water, thereby improving the wet rub fastness of the printed matter. In particular, triethylamine or triethanolamine is preferred because it does not readily volatilize at room temperature, and therefore does not volatilize in the ink state and can also maintain redissolvability (redispersibility) near nozzles.

The alkaline compound is preferably added in an amount capable of neutralizing 20% to 200% relative to the resin acid value. It is preferably 40 to 180%, and more preferably 50 to 120%. This is because when the neutralization rate is lower than this, precipitation of the resin may occur over time, and when it is higher, an increase in pH may cause damage to printer head components and the like. Further, there is a risk that water resistance and wet rub fastness may deteriorate.

### (Coloring material dispersion)

A coloring material dispersion of the present invention contains the block polymer of the present invention, a water-insoluble coloring material, and an aqueous medium, and can be prepared by mixing these components with any additives and dispersing them using a method to be described later.

### [Water-insoluble coloring material]

In the coloring material dispersion of the present invention, a water-insoluble coloring material is used as the coloring material. Typically, it is a pigment or a water-insoluble dye. Here, "water-insoluble" also includes so-called sparingly water-soluble materials that are difficult to completely dissolve in water.

Examples of pigments for yellow inks include C.I. Pigment Yellow 1, 2, 3, 12, 14, 16, 17, 73, 74, 75, 83, 93, 95, 97, 98, 109, 110, 114, 128, 129, 138, 139, 147, 150, 151, 154, 155, 180, 185, and the like, and one or a combination of two or more of these can be used.

Further, examples of pigments for magenta inks include C.I. Pigment Red 5, 7, 12, 48(Ca), 48(Mn), 57(Ca), 57:1, 112, 122, 123, 150, 168, 184, 202, 209; C.I. Pigment Violet 19; and the like, and one or a combination of two or more of these can be used.

Further, examples of pigments for cyan inks include C.I. Pigment Blue 1, 2, 3, 15:3, 15:4, 16, 22, 60; C.I. Vat Blue 4, 60; and the like, and one or a combination of two or more of these can be used.

Further, examples of pigments for black inks include carbon blacks (C.I. Pigment Black 7) such as furnace black, lamp black, acetylene black, and channel black; organic pigments such as aniline black (C.I. Pigment Black 1); and the like.

Further, inorganic pigments such as titanium oxide and iron oxide can also be used.

Among the above pigments, when a pigment has a structure in which aromatic rings are linked, such as anthracene, quinacridone, or biphenyl structures, the effect on storage stability is particularly excellent. This is presumed to be because π-π interactions occur between the aromatic rings of the pigment and biphenyl or phenyl groups of the block polymer of the present invention, thereby further contributing to stabilization. Examples of such pigments include Pigment Yellow 74, 114, 147, 150; Pigment Red 5, 7, 12, 48, 57, 112, 122, 123, 168, 184, 202, 209; Pigment Violet 19; Pigment Blue 1, 2, 22, 60; Pigment Black 7; and the like.

The various pigments described above may be pigments that have been subjected a kneading treatment with a dispersant.

Further, the dispersion of the present invention may contain a disperse dye as the water-insoluble coloring material. A disperse dye is a compound that is sparingly soluble or insoluble in water.

Specific examples of disperse dyes include the following.

Examples of yellow disperse dyes include, but are not limited to, C.I. Disperse Yellow 3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, 232.

Examples of orange disperse dyes include, but are not limited to, C.I. Disperse Orange 1, 3, 5, 7, 11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 66, 71, 73, 76, 78, 80, 89, 90, 91, 93, 96, 97, 119, 127, 130, 139, 142.

Examples of red disperse dyes include, but are not limited to, C.I. Disperse Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, 328.

Examples of violet disperse dyes include, but are not limited to, C.I. Disperse Violet 1, 4, 8, 23, 26, 27, 28, 31, 33, 35, 36, 38, 40, 43, 46, 48, 50, 51, 52, 56, 57, 59, 61, 63, 69, 77.

Examples of green disperse dyes include, but are not limited to, C.I. Disperse Green 9.

Examples of blue disperse dyes include, but are not limited to, C.I. Disperse Blue 3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, 333, 359, 360.

Examples of black disperse dyes include, but are not limited to, C.I. Disperse Black 1, 3, 10, 24.

One or a combination of two or more of the above pigments or water-insoluble dyes can be appropriately selected and used.

### [Aqueous medium]

As the aqueous medium used in the coloring material dispersion of the present invention, water is usually used, but a water-soluble organic solvent also may be used as necessary. Examples of water-soluble organic solvents include 1,2-hexanediol, 1,6-hexanediol, 1,5-pentanediol, 2-pyrrolidone, N-methylpyrrolidone, triethylene glycol monobutyl ether, ethylene glycol, propylene glycol, triethylene glycol, glycerin, and the like. Among these, 1,2-hexanediol, 2-pyrrolidone, and triethylene glycol monobutyl ether are particularly preferred.

### [Additives]

Acetylene glycol-based or silicone-based surfactants or preservatives may be added as necessary. Commercially available products can be used. For example, as acetylene glycol-based compounds, Olfine Y, Surfynol 82, 440, 465, STG, E1010, and as polysiloxane-based compounds, BYK302, BYK348 (manufactured by BYK-Chemie Japan), and the like can be used.

### [Composition of the coloring material dispersion]

In the coloring material dispersion of the present invention, formulation ratios of the above-described components can be appropriately selected according to the intended use. The coloring material dispersion of the present invention may contain, in addition to the above-described components, other components depending on the intended use.

In the coloring material dispersion of the present invention, the content of the coloring material is preferably 1 to 60 parts by weight, more preferably 3 to 40 parts by weight, and most preferably 5 to 25 parts by weight, when the entire dispersion is taken as 100 parts by weight.

Further, the content of the block polymer is preferably 0.1 to 30 parts by weight, more preferably 0.3 to 20 parts by weight, and most preferably 1 to 15 parts by weight, when the entire dispersion is taken as 100 parts by weight.

### [Production of the coloring material dispersion]

To prepare the coloring material dispersion of the present invention, the above-described components may be dispersed using a known method. For example, the dispersion can be prepared by charging the above-described components into a bead mill or other wet-type disperser and performing a dispersion treatment.

### [Crosslinking treatment]

In order to achieve both stability and redispersibility, the dispersion of the present invention can be appropriately subjected to a crosslinking treatment after dispersion.

As a crosslinking agent, an epoxy resin having a glycidyl ether skeleton, or a resin having an oxazoline group, or the like can be used.

The amount of the crosslinking agent is preferably in a range of 0.5% to 60% relative to the resin. When the amount is less than this, the stabilization effect due to crosslinking cannot be achieved, and when the amount is more than this, redispersibility may deteriorate. The crosslinking can be carried out by adding the crosslinking agent to the coloring material dispersion that has undergone the above dispersion step and heating the resulting mixture to around 80 °C.

### [Ultrafiltration]

The coloring material dispersion of the present invention can be subjected to an impurity removal step by an ion exchange treatment or an ultrafiltration treatment. By the ion exchange treatment, ionic substances such as cations and anions (such as divalent metal ions) can be removed, and by the ultrafiltration treatment, dissolved impurities (residual substances from pigment synthesis, excess components in the dispersion composition, resin not adsorbed onto organic pigment, contaminant components, and the like) can be removed.

### [Physical properties of the coloring material dispersion]

Since the block polymer of the present invention exhibits excellent dispersibility as described above, the coloring material dispersion of the present invention can achieve a particle size distribution D50 in a preferred range of 135 nm or less.

By keeping the particle size distribution D50 within the above range, the ink becomes less likely to clog nozzles, thereby improving discharge stability, and sedimentation of the coloring material is suppressed, thereby improving storage stability. The particle size distribution D50 of the colorant dispersion is particularly preferably 110 nm or less, and most preferably 100 nm or less.

To adjust the particle size distribution D50 of the coloring material dispersion within the above range, it is sufficient to appropriately control dispersion time and intensity when preparing the coloring material dispersion, and to remove coarse particles using a filter or the like.

Further, the block polymer of the present invention has excellent storage stability and can maintain the above preferred particle size for one week or longer.

A method for measuring the particle size distribution D50 is as described in Examples, but it is not limited thereto as long as similar results can be obtained.

Since the block polymer of the present invention is less prone to aggregation and entanglement between polymers as described above and viscosity increase is suppressed, the coloring material dispersion of the present invention can achieve a viscosity in a preferred range of 25 mPa·s or less.

By keeping the viscosity within the above range, discharge properties and print quality can be improved when used as an ink. The viscosity is particularly preferably 10 mPa·s or less, and most preferably 5 mPa·s or less.

To adjust the viscosity of the coloring material dispersion within the above range, the neutralization rate of the block polymer may be appropriately adjusted according to the solvent when preparing the coloring material dispersion.

Further, since the block polymer of the present invention exhibits excellent storage stability, the above preferred viscosity can be maintained for one week or longer.

A method for measuring the viscosity is as described in Examples, but it is not limited thereto as long as similar results can be obtained.

### (Ink)

In the present invention, the term "dispersion" means that a water-insoluble coloring material is dispersed in an aqueous medium, and this includes so-called "ink," as well as a state in which the coloring material has been dispersed in advance in an aqueous medium when producing an ink.

When the coloring material dispersion of the present invention is used as an ink, it is preferred to prepare in advance a dispersion in which the components described above have been dispersed, and then add other components depending on the intended use.

### [Other components of the ink]

When preparing an inkjet ink using the coloring material dispersion of the present invention, other components such as an organic solvent, a resin, and a preservative can be added.

The organic solvent is not particularly limited, and examples thereof include polyhydric alcohols and pyrrolidones. Examples of polyhydric alcohols include ethylene glycol, diethylene glycol, propylene glycol, dipropylene glycol, 1,3-propanediol, 1,4-butanediol, 1,6-hexanediol, trimethylolpropane, glycerin, and the like. Polyhydric alcohols improve the wettability of the ink on paper and prevent drying inside head nozzles, thereby exhibiting effects such as increased moisture retention. When polyhydric alcohols are contained, the content thereof can be 2% by mass or more and 30% by mass or less relative to the total mass of the ink.

The resin has a function of improving fixability, and examples thereof include acrylic resins, fluorene-based resins, urethane-based resins, olefin-based resins, rosin-modified resins, terpene-based resins, ester-based resins, amide-based resins, epoxy-based resins, vinyl chloride-based resins, vinyl chloride-vinyl acetate copolymers, ethylene-vinyl acetate-based resins, and the like. These resins can be used singly or in combinations of two or more. As the resin, an emulsion-type resin may be used, or a solution-type resin may be used. When resins are contained, the content thereof can be set to 0.1% by mass or more and 6% by mass or less.

Examples of preservatives and antifungal agents include sodium benzoate, sodium pentachlorophenol, sodium 2-pyridinethiol-1-oxide, sodium sorbate, sodium dehydroacetate, 1,2-dibenzisothiazolin-3-one (Proxel CRL, Proxel BDN, Proxel GXL, Proxel XL.2, Proxel TN, and Proxel LV from Zeneca), 4-chloro-3-methylphenol (such as Preventol CMK from Bayer), and the like.

### [Physical properties of the ink]

Since the block polymer of the present invention is less prone to aggregation and entanglement between polymers as described above and viscosity increase is suppressed, the ink using the coloring material dispersion of the present invention can achieve a viscosity in a preferred range of 7 mPa·s or less.

By keeping the viscosity of the ink within the above range, discharge properties and print quality can be improved. When used in an inkjet ink, the viscosity is particularly preferably 6 mPa·s or less. Further, for high-chroma inkjet inks, the viscosity is most preferably 3.0 mPa·s or more and 5.5 mPa·s or less.

To adjust the viscosity of the ink within the above range, the neutralization rate of the block polymer may be appropriately adjusted according to the solvent when preparing the coloring material dispersion.

Further, since the block polymer of the present invention exhibits excellent storage stability, the above preferred viscosity can be maintained for one week or longer.

A method for measuring the ink viscosity is as described in Examples, but it is not limited thereto as long as similar results can be obtained.

The intended use of the ink is not particularly limited, and examples thereof include printing inks that can be used for inkjet printing and the like, inks for writing instruments, and the like, but it can be particularly suitably used as an ink for inkjet printing.

### Examples

In the following, the present invention is further specifically described with reference to Examples. "Parts" means "parts by weight."

### (Preparation of Block Polymer 1)

In a SUS304 reaction vessel, 385 parts of phenoxyethyl acrylate (PEA, molecular weight 192.2) as a monomer having a hydrophobic functional group, 35 parts of acrylic acid (AA, molecular weight 72.1) as a monomer having a hydrophilic functional group, 43 parts of S-benzyl-S-dodecyl trithiocarbonate as a polymerization regulator, 9.6 parts of azobisisobutyronitrile as a radical initiator, and 420 parts of isobutyl alcohol as a reaction solvent were charged. The interior of the reaction vessel was purged with nitrogen, and while stirring and mixing, the internal temperature was raised to 70 °C using an oil bath. After raising the temperature, the internal temperature was maintained for 6 hours to complete the polymerization reaction. Next, the solvent was distilled off from the reaction vessel under reduced pressure to obtain Polymer A. The obtained Polymer A was subjected to GPC measurement, resulting in a molecular weight of 3380 and a molecular weight distribution (Mw/Mn) of 1.14.

The synthesized Polymer A, 119 parts of phenoxyethyl acrylate as a monomer having a hydrophobic functional group, 87.5 parts of methacrylic acid (MAA, molecular weight 86.09) and 73.5 parts of acrylic acid as monomers having a hydrophilic functional group, 1.9 parts of azobisisobutyronitrile as a radical initiator, and 700 parts of isobutyl alcohol as a reaction solvent were charged into the reaction vessel. After purging the interior of the vessel with nitrogen, the internal temperature was raised to 70 °C while stirring and mixing. After raising the temperature, the mixture was reacted for 8 hours to complete the polymerization. Next, the reaction vessel was depressurized, and the solvent was distilled off to obtain Block Polymer 1. The obtained Block Polymer 1 was subjected to GPC measurement, resulting in a molecular weight of 6220 and a molecular weight distribution (Mw/Mn) of 1.21. Further, the acid value was 182 mgKOH/g.

### (Preparation of Resin Solution 1)

To the synthesized Block Polymer 1, KOH was added in an amount sufficient to neutralize 50% of the acid value of the resin, and after adding ion-exchanged water to achieve a resin concentration of 15%, the mixture was stirred and dissolved using a dissolver at 80 °C for 2 hours, thereby obtaining Resin Solution 1 (50% neutralized product). Further, by changing the amount of KOH added to an amount sufficient to neutralize 120% of the acid value of the resin, and otherwise proceeding in the same manner, Resin Solution 1 (120% neutralized product) was obtained.

### (Preparation of Block Polymers 2 to 12 and Resin Solutions 2 to 12)

Using the same procedure as for Block Polymer 1, Block Polymers 2 to 12 were obtained by changing the monomer ratios as shown in Table 1. The physical properties of these Block Polymers 2 to 12 (acid value, peak top molecular weight, Mw/Mn) are as shown in Table 1. Using the obtained Block Polymers 2 to 12, resin solutions were prepared respectively using the same procedure as for Resin Solution 1. For Block Polymers 2 to 5, 11, and 12, only the 50% neutralized products were prepared. For Block Polymers 6, 9, and 10, only the 120% neutralized products were prepared.

### (Preparation of Resin Solutions 2(1) to (3))

To Block Polymer 2, triethylamine was added in an amount sufficient to neutralize 50% of the acid value of the resin, and after adding ion-exchanged water to achieve a resin concentration of 15%, the mixture was stirred and dissolved using a dissolver at 80 °C for 2 hours, thereby obtaining Resin Solution 2(1) (50% neutralized product).

In the same manner as above except that triethylamine was replaced with triethanolamine, Resin Solution 2(2) (50% neutralized product) was obtained.

In the same manner as above except that triethylamine was replaced with KOH, Resin Solution 2(3) (50% neutralized product) was obtained.

### (Preparation of Block Polymer 13 and Resin Solution 13)

420 parts of "A-LEN10" (trade name, ethoxylated o-phenylphenol acrylate manufactured by Shin-Nakamura Chemical Co., Ltd.; specific gravity 1.135 (25 °C), viscosity 150 mPa·s (25 °C), refractive index: 1.577, molecular weight 268, LogP = 3.98) as a monomer having a hydrophobic functional group, 51.6 parts of S-benzyl-S-dodecyl trithiocarbonate as a polymerization regulator, 11.5 parts of azobisisobutyronitrile as a radical initiator, and 280 parts of methoxypropanol as a reaction solvent were charged into a 2 L stainless steel separable flask. While bubbling with nitrogen and stirring, the system was heated to 70 °C in an oil bath, and after the heating was complete, the mixture was reacted for 6 hours to synthesize Polymer A'. A small amount of the contents was sampled and subjected to GPC measurement, resulting in a peak top molecular weight of 3200 and Mw/Mn = 1.21. Next, 119 parts of ALEN10 as a monomer having a hydrophobic functional group, 87.5 parts of methacrylic acid and 73.5 parts of acrylic acid as monomers having a hydrophilic functional group, and 420 parts of methoxypropanol as a reaction solvent were charged into the flask. The mixture was reacted at 70 °C for 8 hours while maintaining bubbling with nitrogen and stirring. Subsequently, the internal temperature of the system was raised to 170 °C, the system was depressurized, and the solvent was distilled off to recover Block Polymer 13. The obtained Block Polymer 13 was subjected to GPC measurement, resulting in a peak top molecular weight of 5000 and Mw/Mn of 1.30. Further, the acid value was 143 mgKOH/g. The details of Block Polymer 13 are shown in Table 2.

Using the obtained Block Polymer 13, Resin Solution 13 was obtained using the same procdure as for Resin Solution 1. However, a 50% neutralized product was not prepared.

The GPC measurements were carried out under the following conditions.
Apparatus: HLC-8220GPC (manufactured by Tosoh Corporation)
Detector: RI (differential refractive index detector)
Solvent: Degassed THF
Columns: Gelpack GL-R400M, GL-R440, and GL-R450, connected in series with a guard column
Measurement concentration: 10 mg/ml
Flow rate: 2.0 ml/min
Injection volume: 150 µL
Column temperature: 40 °C

### (Example 1)

Resin Solution 1: 40 g, P.R.150: 15 g, 1,2-hexanediol: 5 g, and water: 40 g were mixed, and the mixture was dispersed for 5 hours using a paint shaker with 0.5 mm zirconia beads. Further dispersion was performed for 20 hours using 0.1 mm zirconia beads.

The zirconia beads were separated, and the recovered dispersion was treated with a centrifuge at 16,300 rpm for 10 minutes to remove coarse particles, thereby obtaining a pigment dispersion. The obtained pigment dispersion, ion-exchanged water, and a clear ink mixed and prepared according to the formulation shown in Table 3 were mixed in the following formulation to obtain an evaluation ink.
Evaluation ink formulation ratio (% by mass)
Pigment dispersion: amount such that P.R.150 is 5.60% by mass
Clear ink: 45.88
Ion-exchanged water: remainder
Total: 100.00

The pigment dispersion and evaluation ink were subjected to the following evaluations. The results are shown in Table 4.

### (Examples 2 to 5, Comparative Examples 1 to 6)

As shown in Table 4, pigment dispersions and evaluation inks were prepared using the same procedure as in Example 1 except that the block polymer was changed, and then, the following evaluations were performed. The results are shown in Table 4.

### (Evaluation of storage stability)

For each pigment dispersion obtained in Examples 1 to 5 and Comparative Examples 1 to 6, the viscosity and particle size distribution D50 were measured immediately after preparation. Subsequently, the dispersions were allowed to stand in a constant-temperature chamber at 60 °C for one week, after which the viscosity and particle size distribution D50 were measured. Further, the viscosity of each ink obtained in Examples 1 to 5 and Comparative Examples 1 to 6 was also measured in the same manner. A cone-rotor type rotational viscometer ("TV25 type" manufactured by Toki Sangyo Co., Ltd.) was used as a viscosity measuring instrument, and "Nanotrac Wave II EX-150" (manufactured by Nikkiso Co., Ltd.) was used as a particle size distribution D50 measuring instrument.

For the particle size distribution D50 of the pigment dispersions, ⊚ was assigned for 110 nm or less, ○ for 135 nm or less, and × for greater than 135 nm.

For the viscosity of the pigment dispersions, ⊚ was assigned for 10 mPa·s or less, ○ for 25 mPa·s or less, and × for greater than 25 mPa·s.

For the viscosity of the inks, ⊚ was assigned for 6 mPa·s or less, ○ for 7 mPa·s or less, and × for greater than 7 mPa·s.

### (Evaluation of redispersibility)

10 µL of each ink from Examples 1 to 5 and Comparative Examples 1 to 6 was dropped onto the bottom of a plastic container at five locations using a micropipette, and after drying under reduced pressure at 60 °C for 1 hour, the plastic container was filled with a liquid of the evaluation ink component other than the pigment dispersion, and whether or not redispersion occurred was visually confirmed. Samples that were substantially completely redispersed were rated as ○, while those showing some aggregated lumps or no redispersion at all were rated as ×.

### [Table 1]

**Table 1**

| Block polymer | Segment (A) (Seament (A)) | | | | | Segment (B) (Segment (B)) | | | | | | Each entire block polymer | | | |
|---|---|---|---|---|---|---|---|---|---|---|---|---|---|---|---|
| | Monomer mass ratio | | | Functional group molar ratio (hydrophobic/ hydrophilic) | Molecula r weight | Monomer mass ratio | | | | Functional group molar ratio (hidrophobic) hydrophilic) | Molecula r weight | Segment mass ratio (A:B) | Acid value | Mw/Mn | Molecula r weight |
| | PEA | AA | PEA/AA | | | PEA | MAA | AA | PEA/(MAA+A A) | | | | | | |
| Block Polymer 1 | 55.0 | 5.0 | 11.0 | 4.12 | 3380 | 17.0 | 12.5 | 10.5 | 0.7 | 0.30 | 2840 | 60:40 | 182 | 1.21 | 6220 |
| Block Polymer 2 | 55.0 | 10.0 | 5.5 | 2.06 | 3310 | 17.0 | 12.5 | 5.5 | 0.9 | 0.40 | 3010 | 6535 | 183 | 1.19 | 6320 |
| Block Polymer 3 | 55.0 | 5.0 | 11.0 | 4.12 | 3380 | 18.0 | 6 | 16.0 | 0.8 | 0.32 | 3160 | 6040 | 183 | 1.19 | 6540 |
| Block Polymer 4 | 55.0 | 10.0 | 5.5 | 2.06 | 4940 | 17.0 | 12.5 | 5.5 | 0.9 | 0.40 | 4140 | 60:35 | 182 | 1.29 | 9080 |
| Block Polymer 5 | 55.0 | 10.0 | 5.5 | 2.06 | 9040 | 17.0 | 12.5 | 5.5 | 0.9 | 0.40 | 5960 | 60:35 | 186 | 1.48 | 1 5000 |
| Block Polymer 6 | 60.0 | None | - | - | 3680 | None | 21.5 | 18.5 | - | - | 2650 | 6040 | 279 | 1.16 | 6330 |
| Block Polymer 7 | 55.0 | 5.0 | 11.0 | 4.12 | 3760 | None | 21.5 | 18.5 | - | - | 2750 | 60:40 | 318 | 1.18 | 6510 |
| Block Polymer 8 | 50.0 | 10.0 | 5.0 | 1.87 | 3960 | None | 21.5 | 18.5 | - | - | 3090 | 60:40 | 354 | 1.2 | 7050 |
| Block Polymer 9 | 60.0 | None | - | - | 3360 | 17.0 | 12.5 | 10.5 | 0.7 | 0.30 | 2600 | 6040 | 120 | 1.19 | 5960 |
| Block Polymer 10 | 46.7 | None | - | - | 2150 | 13.3 | 21.5 | 18.5 | 0.3 | 0.14 | 4100 | 46.7:53.3 | 219 | 1.23 | 6250 |
| Block Polymer 11 | 30.0 | 35.0 | 0.9 | 0.32 | 3410 | 17.0 | 12.5 | 5.5 | 0.9 | 0.40 | 3130 | 6535 | 337 | 1.30 | 6540 |
| Block Polymer 12 | 55.0 | 10.0 | 5.5 | 2.06 | 11400 | 17.0 | 12.5 | 5.5 | 0.9 | 0.40 | 7200 | 6535 | 184.0 | 1.5 | 18600 |

### [Table 2]

**Table 2**

| Block polymer | Segment (A) (Segment (A)) | | | | | Sesment (B) (Segment (B)) | | | | | | Entire block polymer | | | |
|---|---|---|---|---|---|---|---|---|---|---|---|---|---|---|---|
| | Monomer mass ratio | | | Functional group molar ratio (hydrophobic/ hydrophilic) | Molecular weight | Monomer mass ratio | | | | Functional group molar ratio (hydrodhobic/ hydrophilic) | Molecular weight | Segment mass ratio (A:B) | Acid value | Mw/ Mn | Molecular weight |
| | A-LEN10 | AA | A-LEN10/AA | | | A-LEN10 | MAA | AA | A-LEN10/MAA +AA) | | | | | | |
| Block Polymer 13 | 60.0 | None | - | - | 1800 | 17.0 | 12.5 | 10.5 | 0.7 | 0.22 | 3200 | 6040 | 143 | 1.30 | 5000 |

**[Table 3]**

| Table 3 Clear Ink Composition | |
|---|---|
| Material | Formulation amount (mass%) |
| Ion-exchanged water | 39.96 |
| Propylene glycol | 13.44 |
| Trimethylolpropane | 5.04 |
| 2-Pyrrolidone | 3.36 |
| Glycerin | 13.44 |
| Triethylene glycol monobutyl ether | 10.08 |
| 1,2-Hexanediol | 8.40 |
| Surfynol 104 PG 50% dilution | 1.40 |
| Surfynol 465 | 2.80 |
| TEA | 2.10 |
| Total | 100.00 |

**[Table 4]**

| Table 4- Evaluation Results | | | | | | | | | |
|---|---|---|---|---|---|---|---|---|---|
| | Block polymer used In pigment dispersion | Neutralization rate (%) | Dispersion | | | | Ink | | |
| | | | Particle size distribution D50 | | Viscosity (mPas) | | Viscosity (mPas) | | Redispersibility |
| | | | Initial | 60°C1W | Initial | 60°C1W | Initial | 60°C1W | |
| Example 1 | Block Polymer 1 | 120 | ○126 | ○135 | ○14.86 | ○24.39 | 05.67 | ⊚5.16 | ○ |
| | | 50 | ⊚96 | ⊚103 | 04.65 | ⊚4.50 | ⊚5.46 | ⊚5.12 | ○ |
| Example 2 | Block Polymer 2 | 50 | ⊚86 | ⊚95 | ⊚3.89 | ⊚3.69 | ○6.60 | 05.73 | ○ |
| Example 3 | Block Polymer 3 | 50 | ⊚97 | ⊚105 | ⊚3.76 | ⊚3.65 | 05.98 | ⊚5.70 | ○ |
| Example 4 | Block Polymer 4 | 50 | ⊚97 | ○114 | ⊚6.31 | ⊚5.96 | ○6.34 | ○6.80 | ○ |
| Example 5 | Block Polymer 5 | 50 | 0104 | 0119 | 08.20 | ⊚7.38 | ○6.50 | ○6.80 | ○ |
| Camparative Example 1 | Block Polymer 6 | 120 | 0130 | ×150 | ×52. 80 | ×41.64 | ×9.61 | ×7.69 | × |
| Camparative Example 2 | Block Polymer 7 | 120 | o132 | ×142 | ×39. 45 | ×30.01 | ×7.92 | ×7.16 | ○ |
| | | 50 | ×142 | ×157 | 010.22 | ⊚9.56 | 06.81 | ○6.64 | ○ |
| Comparative Example 3 | Block Polymer 8 | 120 | ×143 | ×157 | ×37.69 | ○23.04 | ×7.69 | ×11.01 | ○ |
| | | 50 | ×137 | ×145 | ⊚9.17 | ⊚9.64 | ×7.40 | ×7.34 | ○ |
| Camparative Example 4 | Block Polymer 9 | 120 | ○122 | ○131 | 07.74 | ⊚5.60 | ⊚5.67 | ⊚5.04 | × |
| Comparative Example 5 | Block Polymer 10 | 120 | ○128 | ×144 | ×35.12 | ○20.52 | ×7.04 | ○6.53 | × |
| Camparative Example 6 | Block Polymer 11 | 50 | ⊚98 | ×198 | 08.67 | ×Gel | ×20.9 | ×Gel | × |
| Camparative Example 7 | Block Polymer 12 | 50 | ⊚101 | ○121 | 010.50 | ⊚8.33 | ×7.97 | ×7. 70 | ○ |
| Comparative Example 8 | Block Polymer 13 | 120 | ⊚108 | ○123 | ⊚7.20 | ⊚4.40 | ⊚5.30 | ⊚5.10 | × |

### (Evaluation results)

As shown in Table 4, it can be seen that in Comparative Examples 1, 4, 5, and 6, which do not contain a structural unit derived from a monomer having a hydrophilic functional group in the segment (A) (or the segment (A')), redispersibility is insufficient. Further, it can be seen that in Comparative Examples 1, 2, and 3, which do not contain a structural unit derived from a monomer having a hydrophobic functional group in the segment (B) (or the segment (B')), the initial viscosity or particle size distribution D50 deviates from the preferred range. In addition, it can be seen that in Comparative Examples 1, 2, 3, and 5, the particle size distribution D50 significantly increased after one week of storage, indicating poor storage stability.

In contrast, in Examples 1 to 5 using the block polymer of the present invention, which contains, in both the segment (A) (or the segment (A')) and the segment (B) (or the segment (B')), a structural unit derived from a monomer having a hydrophobic functional group and a structural unit derived from a monomer having a hydrophilic functional group in a ratio within a predetermined range, high redispersibility is exhibited. Further, it can be seen that even after one week of storage, the viscosity and particle size distribution D50 remain within suitable ranges for inkjet inks, indicating high storage stability.

### (Example 6)

Resin Solution 2(1): 48 g, P.B-15:3: 18 g, 1,2-hexanediol: 5 g, and water: 29 g were mixed, and the mixture was dispersed for 5 hours using a paint shaker with 0.5 mm zirconia beads. Further dispersion was performed for 8 hours using 0.1 mm zirconia beads.

The zirconia beads were separated, and the recovered dispersion was treated with a centrifuge at 16,300 rpm for 10 minutes to remove coarse particles, thereby obtaining a pigment dispersion.

### (Examples 7 and 8)

Pigment dispersions were obtained in the same manner except that Resin Solution 2(2) and Resin Solution 2(3) were used instead of Resin Solution 2(1).

### (Evaluation of wet rub fastness)

Evaluation inks were obtained by mixing the pigment dispersions obtained in Examples 6 to 8 according to the following formulation.
Pigment dispersion: amount such that P.B-15:3 is 7% by mass
Binder (urethane resin): 5
1,2-Hexanediol: 10
Surface conditioner: 1
Ion-exchanged water: remainder
Total: 100

As the surface conditioner, "BYK-302" (trade name, polyether-modified polydimethylsiloxane manufactured by BYK-Chemie) was used.

The D50 and viscosity of the pigment dispersions, as well as the viscosity of the evaluation inks, were measured using the methods described above. The results are shown in Table 5.

**[Table 5]**

| Table 5 Evaluation Results | | | | | | | |
|---|---|---|---|---|---|---|---|
| | Block polymer used in pigment dispersion | Neutralization rate (%) | Pigment dispersion | | | | Ink |
| | | | Particle size distribution D50 (nm) | | Viscosity (mPas) | | Viscosity (mPas) |
| | | | Initial | 60°C1W | Initial | 60°C1W | Initial |
| Example 6 | Block Polymer 2 | Triethylamine | 88 | 87 | 6.7 | 6.2 | 6.5 |
| Example 7 | Block Polymer 2 | Triethanolamine | 91 | 93 | 6.7 | 6.3 | 6.7 |
| Example 8 | Block Polymer 2 | KOH | 103 | 107 | 4.3 | 4.1 | 6.5 |

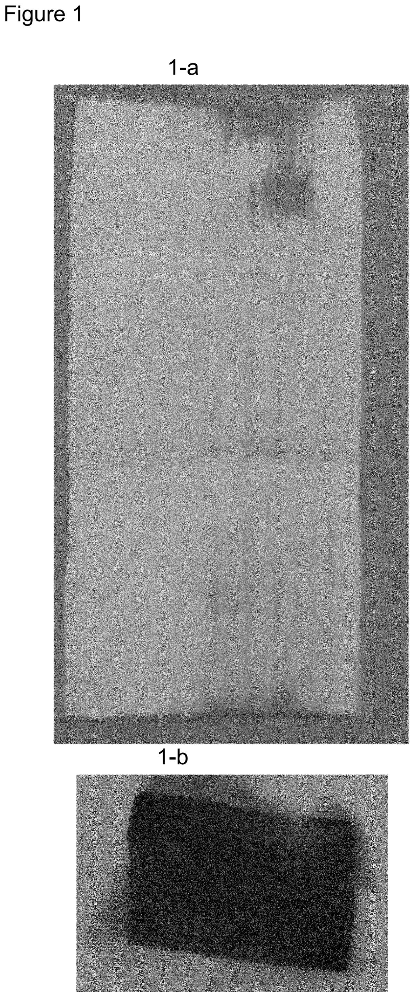

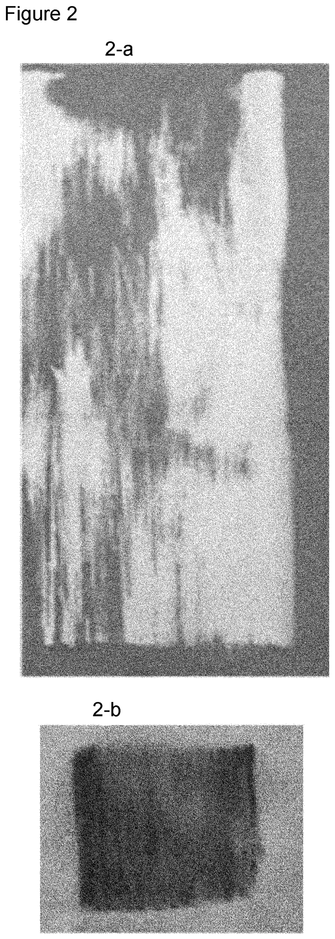

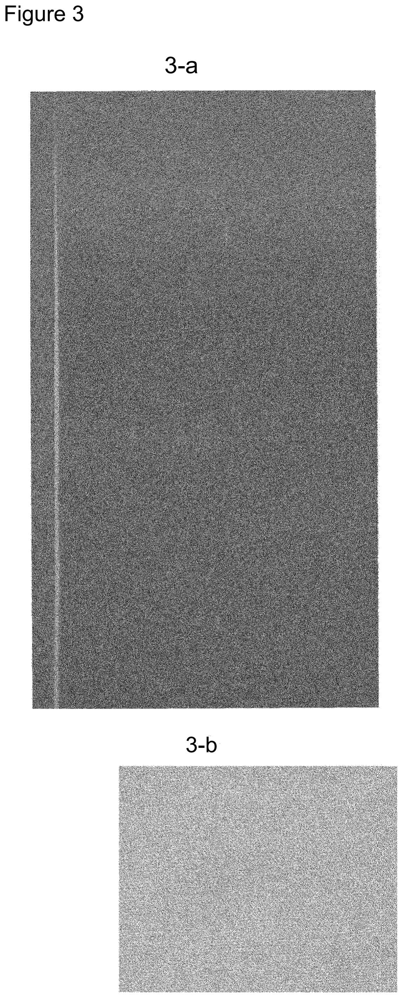

Each evaluation ink was applied to a PET film using a bar coater #3, and dried in an oven at 80 °C for 3 minutes to obtain a coating film. Using a Gakushin-type friction tester (Friction Tester Type II manufactured by Yasuda Seiki Seisakusho Ltd.), a white cotton cloth that was 100% wetted with ion-exchanged water was attached to a rubbing element, and a dry rubbing test in which a surface of the coating film was rubbed for 10 reciprocations under a load of 200 g was performed to evaluate wet rub fastness. The results of photographing the appearance of the coating film after 10 reciprocations using a digital camera OLYMPUS TOUGH TG-5 are shown in Figs. 1 to 3. In the figures, 1-a, 2-a, and 3-a show the state of the film coating after the wet rub fastness test, while 1-b, 2-b, and 3-b show the state of the white cotton cloth used in the wet rub fastness test after the test.

It can be seen that Example 6 and Example 7, which used Resin Solution 2(1) or Resin Solution 2(2) neutralized with triethylamine or triethanolamine as a neutralizing agent, have a smaller area where the coating film was peeled off compared to Example 8, which used Resin Solution 2(3) neutralized with KOH, indicating superior wet rub fastness. This is considered to be because the amine compound neutralizing the resin volatilized, rendering the resin insoluble in water.

### Industrial Applicability

As described above, according to the present invention, it is possible to obtain a block polymer exhibiting extremely excellent performance as a dispersant, a coloring material dispersion having excellent performance using the block polymer, and an inkjet ink having excellent performance using the block polymer and the coloring material dispersion.

## Claims

1. A block polymer **characterized by** having at least one segment (A) satisfying the following (a1) and (a2), and at least one segment (B) satisfying the following (b1) and (b2), and by having a peak top molecular weight of 3,000 or more and 16,000 or less:
(a1): having a structural unit derived from a monomer having a hydrophobic functional group and a structural unit derived from a monomer having a hydrophilic functional group, wherein a mass ratio of the two (total mass of the structural unit derived from a monomer having a hydrophobic functional group / total mass of the structural unit derived from a monomer having a hydrophilic functional group) is 2.3 or more and 19.0 or less
(a2): peak top molecular weight of 750 or more
(b1): having a structural unit derived from a monomer having a hydrophobic functional group and a structural unit derived from a monomer having a hydrophilic functional group, wherein a mass ratio of the two (total mass of the structural unit derived from a monomer having a hydrophobic functional group / total mass of the structural unit derived from a monomer having a hydrophilic functional group) is 0.43 or more and less than 2.3
(b2): peak top molecular weight of 750 or more

2. The block polymer according to claim 1, **characterized in that**, in the segment (A), a proportion occupied by a sum of mass of the structural unit derived from a monomer having a hydrophobic functional group and mass of the structural unit derived from a monomer having a hydrophilic functional group is 10% by mass or more, and in the segment (B), a proportion occupied by a sum of mass of the structural unit derived from a monomer having a hydrophobic functional group and mass of the structural unit derived from a monomer having a hydrophilic functional group is 10% by mass or more.

3. The block polymer according to claim 2, **characterized in that** a proportion occupied by a sum of mass of the segment (A) and mass of the segment (B) in the block polymer is 50% by mass or more.

4. The block polymer according to claim 3, **characterized in that** the monomer having a hydrophobic functional group is a monomer having a phenyl group and/or a monomer having a biphenyl group, and the monomer having a hydrophilic functional group is a monomer having a carboxy group.

5. A block polymer **characterized by** having at least one segment (A') satisfying the following (a1') and (a2), and at least one segment (B') satisfying the following (b1') and (b2), and by having a peak top molecular weight of 3,000 or more and 16,000 or less:
(a1'): a molar ratio of a hydrophobic functional group to a hydrophilic functional group (total molar amount of a hydrophobic functional group / total molar amount of a hydrophilic functional group) is 0.85 or more and 8.50 or less
(a2): peak top molecular weight of 750 or more
(b1'): a molar ratio of a hydrophobic functional group to a hydrophilic functional group (total molar amount of a hydrophobic functional group / total molar amount of a hydrophilic functional group) is 0.16 or more and less than 0.85
(b2): peak top molecular weight of 750 or more

6. The block polymer according to claim 5, **characterized in that**, in the segment (A'), a proportion occupied by a sum of mass of the hydrophobic functional group and mass of the hydrophilic functional group is 10% by mass or more, and in the segment (B'), a proportion occupied by a sum of mass of the hydrophobic functional group and mass of the hydrophilic functional group is 10% by mass or more.

7. The block polymer according to claim 6, **characterized in that** a proportion occupied by a sum of mass of the segment (A') and mass of the segment (B') in the block polymer is 50% by mass or more.

8. The block polymer according to claim 7, **characterized in that** the hydrophobic functional group is a phenyl group and/or a biphenyl group, and the hydrophilic functional group is a carboxy group.

9. The block polymer according to any one of claims 1 to 8, **characterized by** having an acid value of 120 mgKOH/g or more and 190 mgKOH/g or less.

10. A coloring material dispersion **characterized by** comprising the block polymer according to any one of claims 1 to 9, a water-insoluble coloring material, and an aqueous medium.

11. The coloring material dispersion according to claim 10, wherein the coloring material is a pigment and/or a water-insoluble dye.

12. A method for producing a printing ink, **characterized by** mixing the coloring material dispersion according to claim 10 with an organic solvent, a resin, and a preservative.

13. A printing ink containing at least the block polymer according to any one of claims 1 to 9, a coloring material, an organic solvent, a resin, and a preservative.
